# EUROPEAN PATENT APPLICATION

(11) **EP 1 262 888 A1**
(43) Date of publication of application: **04.12.2002**
(21) Application number: 01304706.3
(22) Date of filing: 29.05.2001
(51) Int. Cl.: G06F 17/60

(54) **System and method for managing a repair process**

(71) Applicant: LUCENT TECHNOLOGIES INC., Murray Hill, New Jersey 07974-0636 (US)
(72) Inventor: Klaassen, Diederik, 1241 HD Kortenhoef (NL); Plugge, Walter, 8212 DG Lelystad (NL); Zeeman, Cor, 3824 NM Amersfoort (NL)
(74) Representative: Sarup, David Alexander

(57) **Abstract**

A modular system is provided especially to support a repair process. The modules can be executed in different order depending on information entered by an operator about the contractual obligations towards the customer.

## Description

### Background of the invention

Manufactured products or parts of products sometimes need repair after they have been used by customers for some time. The repair process is usually part of a service process managed by a service organization. The service organization has to receive orders for repairs, receives parts, supply spare parts, send parts to a repair shop, returns the repaired parts, receive back spare parts etc.

Computer support of the management of such a service organization has hitherto been implemented using conventional computer systems for product sales and delivery. It has been found that the use of such computer systems for the management of repairs remains relatively labor intensive. The invention aims to reduce the amount of work needed.

### Summary of the invention

Amongst others, it is an object of the invention to provide for a computer system that supports a service process that includes repairs of parts.

According to the invention, a computer system contains software modules that support management of respective steps in a repair service process, including modules for management of receiving a part to be repaired, sending a spare part, sending a repaired part, closing a repair transaction and receiving back a spare part. The modules provide for storage of information representing the status of these actions, and for output of information identifying which actions need to be taken for which parts. The output of information is used to control which parts are shipped and where, to send invoices etc.

The system has an operator interface (for example a bar code scanner and/or a keyboard) for receiving information that identifies the part to be repaired and a customer for whom the part is to be repaired. The system stores contract information about the customer, determines whether modules are executed and a sequence in which the modules are executed, dependent on the information entered by the operator. The entered information is passed to the various modules when needed.

Thus, for example for a customer who has a service contract that entitles him or her to an immediate spare part, the module for delivery of the spare part will be executed first, and the module for delivery of the repaired part will be executed later, when the part has been repaired. For a customer that only has a contract for repairs without receiving a spare part, the module for delivery of the spare part will not be executed. For a customer that has a contract for receiving a working part within a certain time, for example N weeks, the module for delivery of the spare part will be executed only after N weeks if a repaired part has not yet been delivered. Depending on whether or not it follows from the identifier that the part is still in its guarantee period, or whether or not the customer has an ongoing guarantee a module is executed to send an invoice to the customer.

In an embodiment of the computer system, the system has a software module for creating orders for batching parts or for managing sending of a batch of parts or for managing receiving of a batch of parts. This module batches parts from different customers and/or repaired parts received in different batches form the same customer so that the parts are processed as a batch in the repair process.

The parts are for example parts of a telecom system. Such a system contains many parts whose service, repair and replacement need to be monitored closely in order to ensure continued operation of the system.

These and other objects and advantageous aspects of the computer system and method according to the invention will be described in more detail using the following figures.

### Brief description of the drawing

- Figure 1: shows a computer system
- Figure 2-12: shows process flows for repair processes

### Detailed description

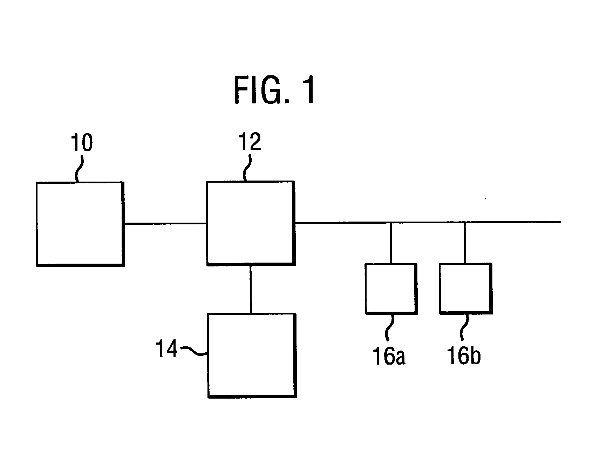

Figure 1 shows a computer system containing a central computer 12 having connections to an input station 10, a storage device 14 and terminals 16a,b. In operation storage device 14 stores information about customer contracts, parts, and repair transactions. Information about transactions is entered via input station 10 (for example by means of a bar code scanner, which scan a barcode on the part, or by means of a keyboard to type in a customer ID), processed by central computer 12 dependent on contract and/or part information from storage device 14. Results of processing are output to input station 10 and/or storage device 14 and or terminals 16a,b.

The central computer is arranged to execute different modules, for example different modules for managing transactions from the following list:

| | |
|---|---|
| C ordering | (receiving a repair order from a customer) |
| C receipt tr | (receiving a part to be repaired from a customer) |
| S ordering/selecting | (sending an order to repair a part to a repair shop/selecting a number of parts to be combined in the same order) |
| S ship tr | (sending a part or parts the repair shop) |
| S receipt tr | (receiving repaired parts from the repair shop) |
| S close aut. | (closing information about repair, possibly sending information for paying invoices to the repair shop) |
| C selecting | (selecting parts to be send to a customer, possibly together in a batch) |
| C ship tr | (sending a part or parts to a customer) |
| C close aut | (closing information about the repaired part, possibly sending information for billing the customer) |
| T close aut | (closing the total information about the repair) |

The modules create or delete entries in a database for parts or batches or parts, or update such entries upon receiving a signal that a relevant step in the repair process has been executed or is to be executed. At certain points the modules request input of information, such as an identifier that specifies a customer for whom the repair is executed, or a part number of the part that is to be repaired.

Dependent on a contract between the service organization and the customer and/or depending on the part, the modules are executed in different combinations and sequences. To support this, more than one module has provisions for inputting relevant identifiers. Dependent on whether and in which sequence the modules are executed, one module or another may request entry of such information for a certain part, whichever module first needs this information to create an entry or to update an entry.

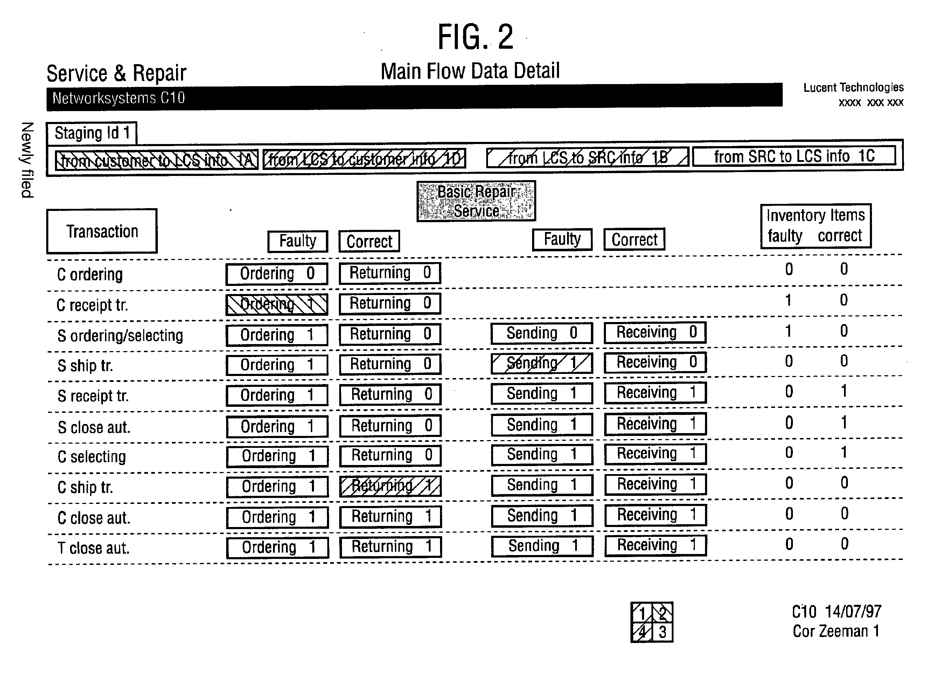

Figure 2 illustrates a first sequence of execution of modules, which corresponds to a basic repair service. In a leftmost column, the executed modules are named, from top to bottom in the order in which they are executed. The second, third, fourth and fifth leftmost columns blocks are used to indicate the information records available for execution of the module, the blocks are "ordering", "returning", "sending" and "receiving". A "1" indicates that information is available in the record. A "0" indicated that no information is available. Shaded blocks indicate that the record is updated by the module named in the leftmost column of the row in which the shaded block occurs. The update may require an input from an operator, such as scanning a barcode on a part that has been received from a customer, or returned from a repair shop in other cases the update may generated internally. For the "C receipt tr" module, information about the part from the customer, such as the symptoms of a fault or a probable cause of the fault (e.g. lightning stroke) are entered. The "S ship tr" module outputs an instruction to ship the part to the repair shop and optionally the bar code on the part may be scanned at shipment to indicate to the system that the part has been shipped. Similarly, for the "S receipt tr" module a bar code may be scanned to indicate which part has been returned and optionally information may be entered about the repair, for example the return date, repair cost etc. is entered. For the "C ship tr", an instruction to ship the part to the customer is output and optionally the part is scanned to indicate when it is shipped, also optionally information about the repair is output for the customer.

The two rightmost columns represent the change in inventory at the transfer point between customers and repair shop. "1" in the "faulty" column indicates that an additional faulty part is present and similarly "1" in the "correct" column indicates that an additional correct part is present.

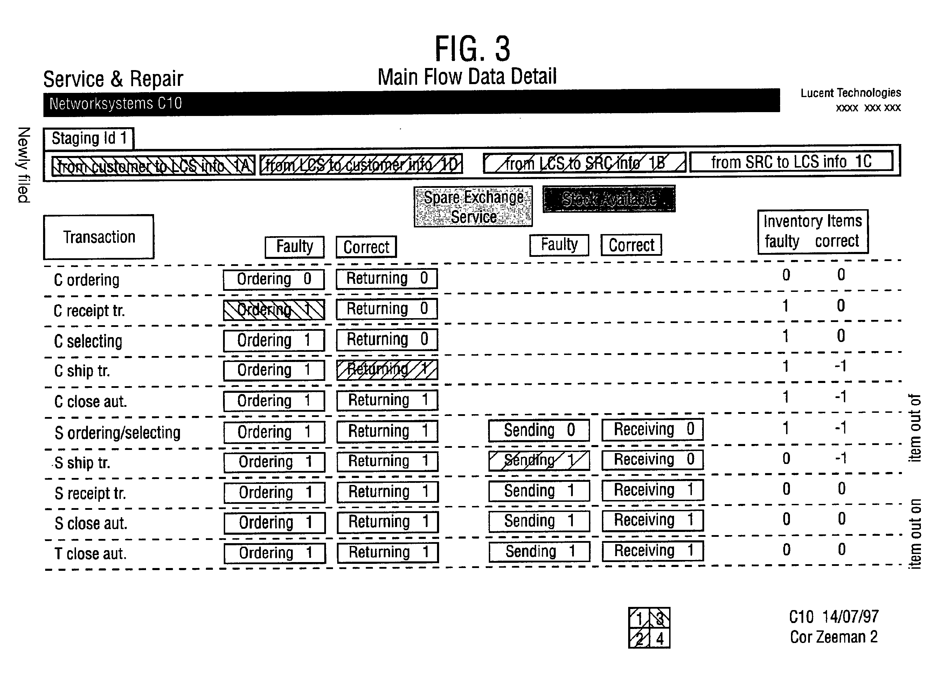

Figure 3 shows a second sequence, which corresponds to the modules executed when the system detects that spare parts must be provided to replace the parts in repair. It should be noted that the modules are executed in a different order in this case. The "C ship tr" module is executed before the receipt of the repaired part from the workshop. Once the repaired part has been received it is entered into the stock at the service point, for use in a later repair. Therefore no further shipment step to the customer is executed. Preferably, the "C ship tr" module links the part number of the part repaired to that of the spare part in a single transaction record. Thus no additional work is needed to enter information separately about reception of the part to be repaired and the spare part.

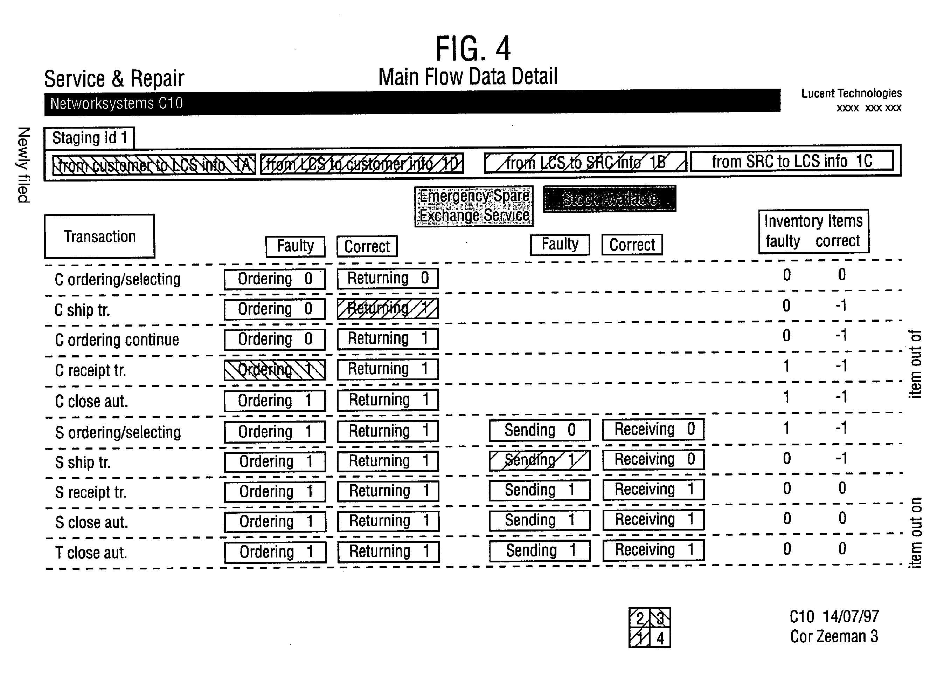

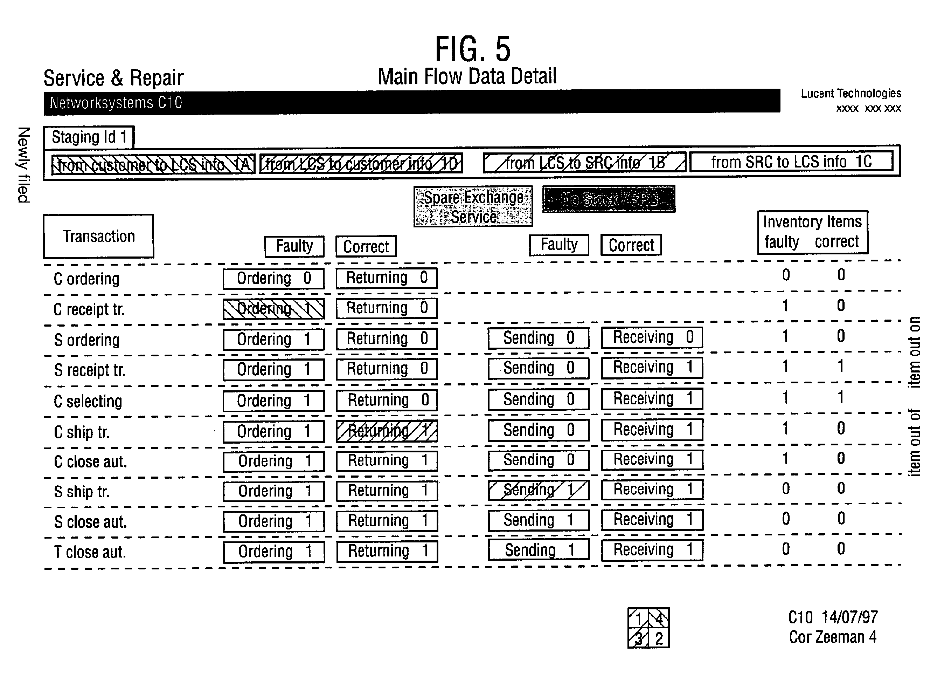

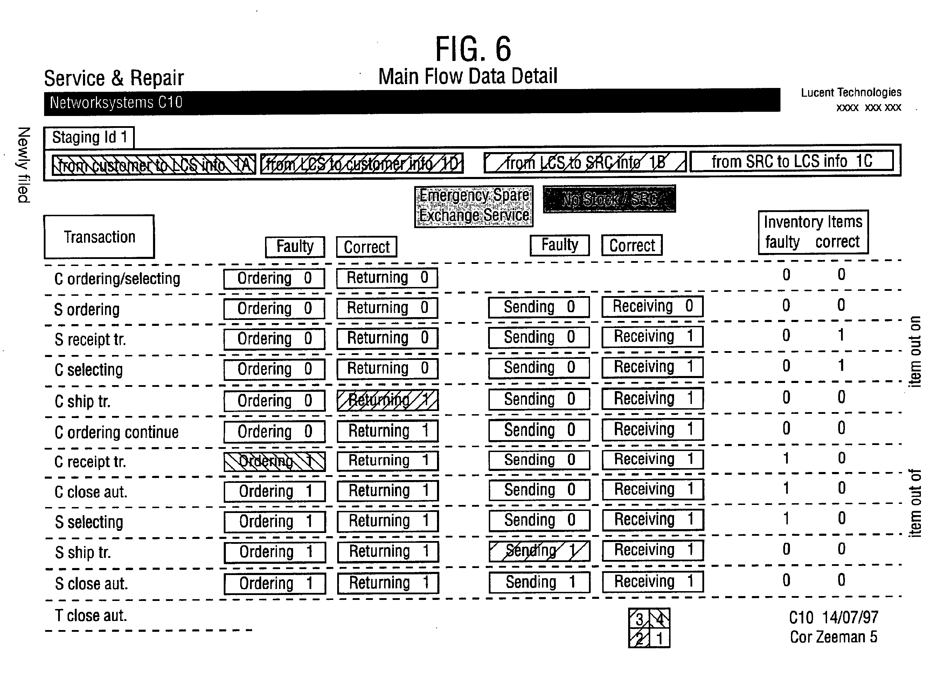

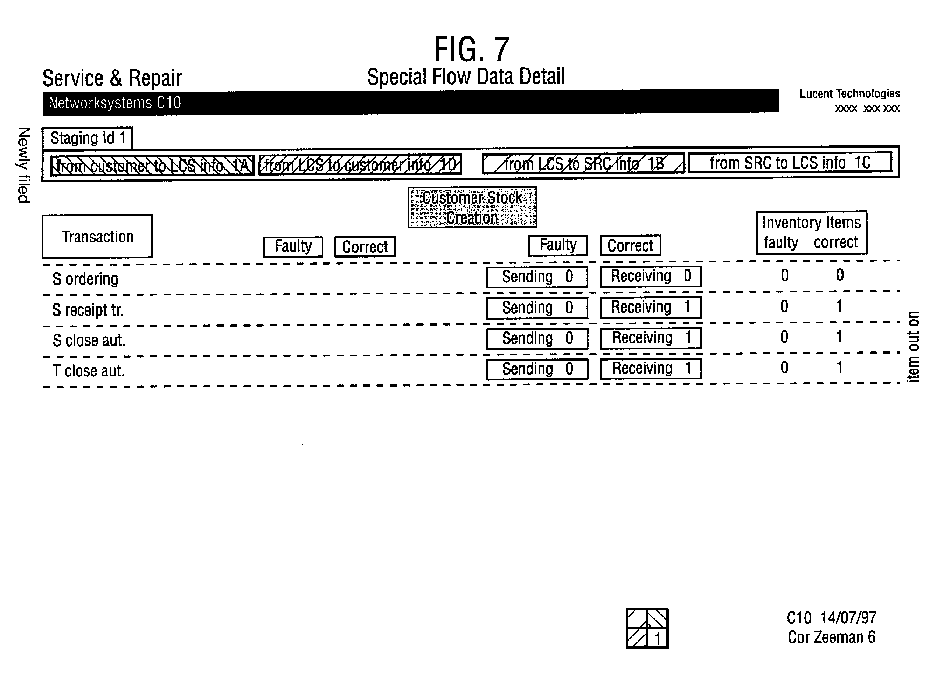

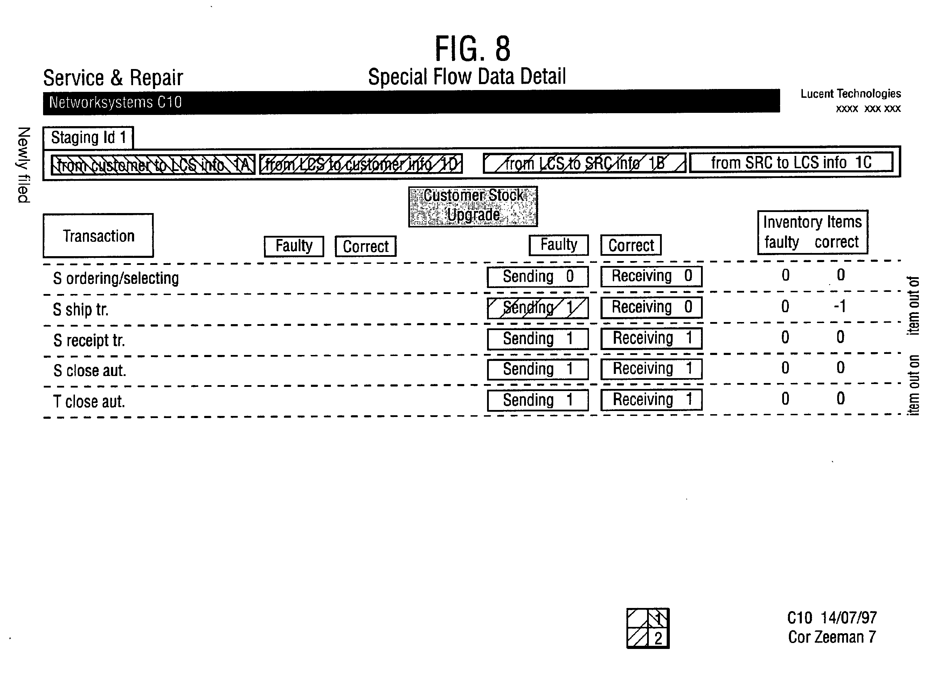

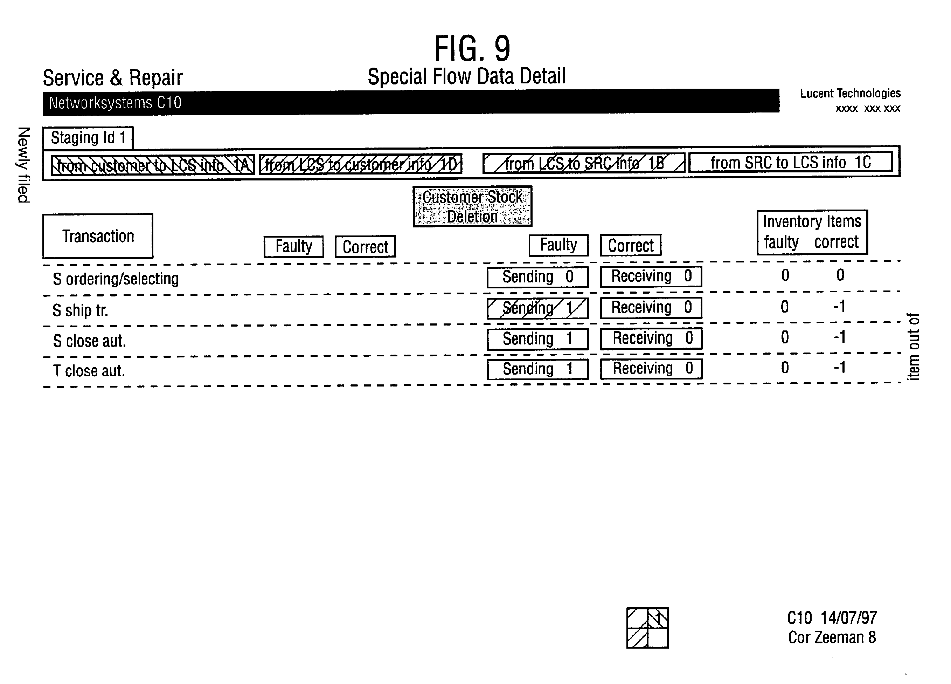

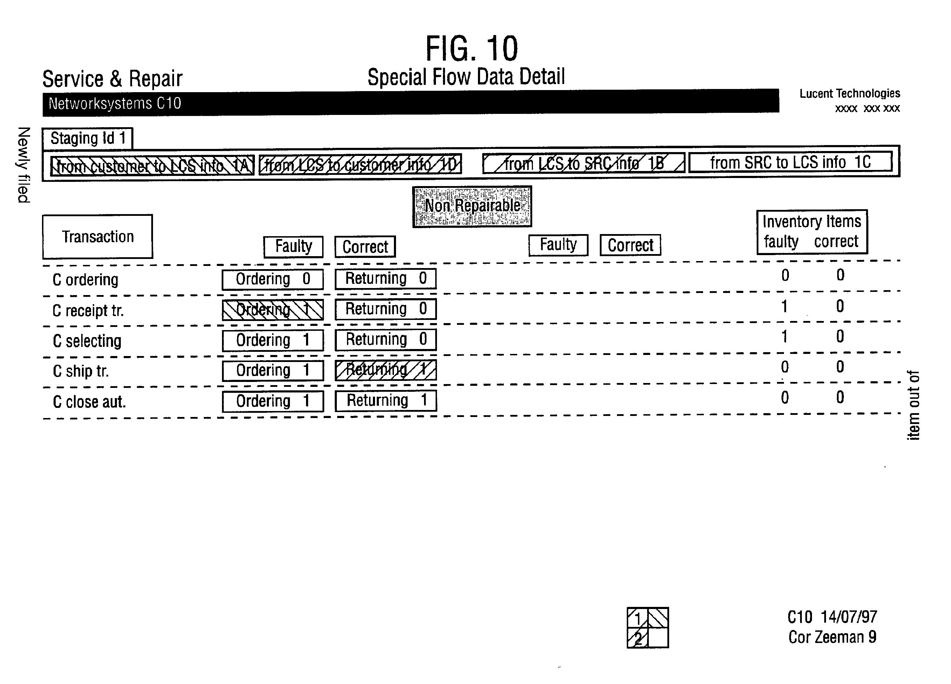

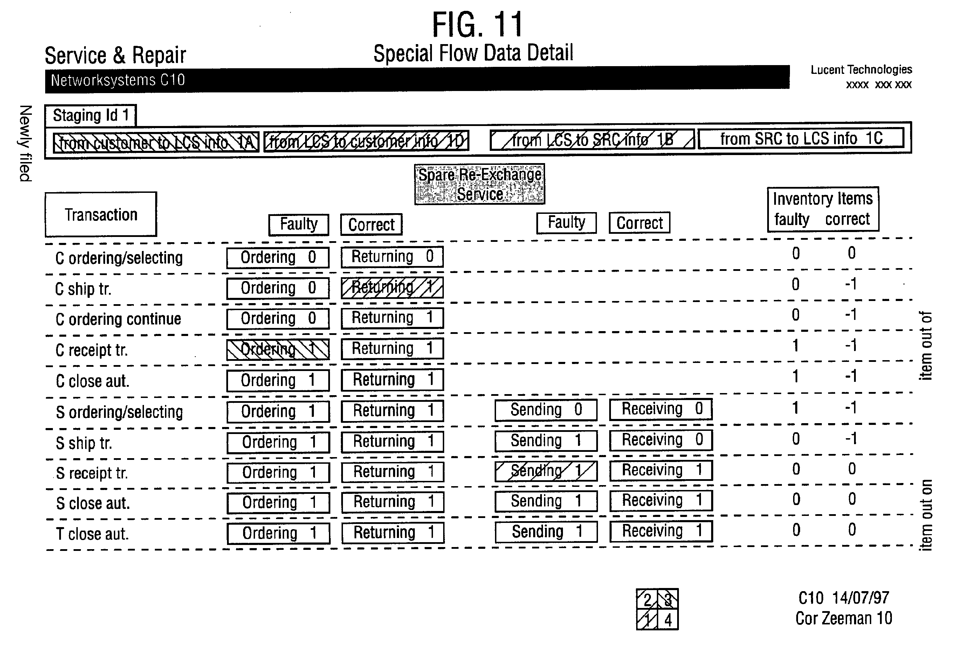

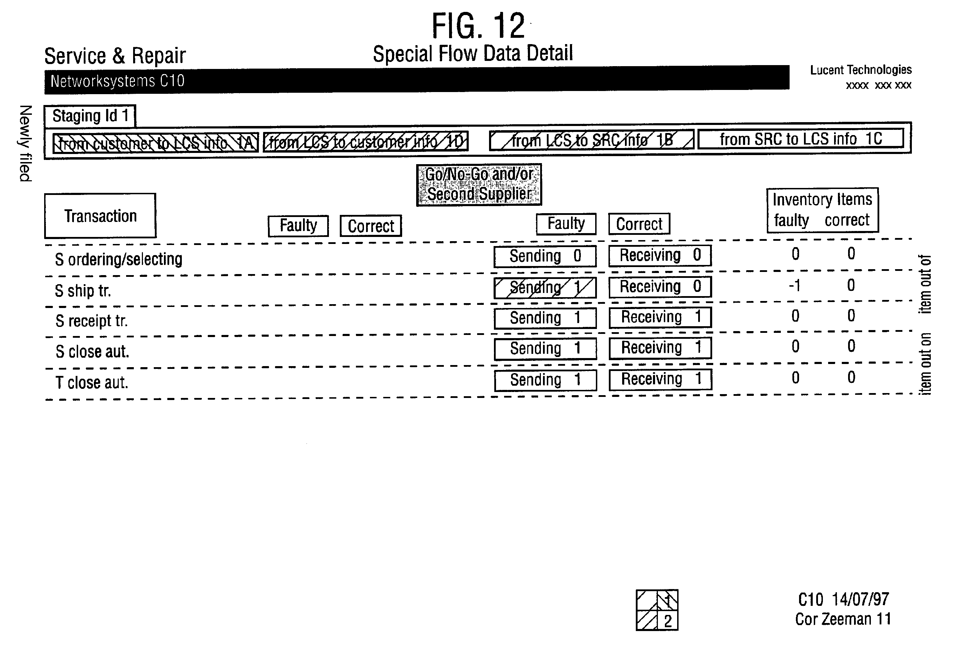

Similarly, figures 4-12 show different orders of execution, successively for processes such as an emergency spare exchange service with stock at the transfer point, a spare exchange service with spare parts ordered from a supplier (twice), creation of a stock of spare parts at the customer site, upgrade of that stock, deletion of that stock, recording of non-repairable products, re-exchange of spares and ordering a repair from a second supplier repair shop respectively.

The point to be noticed in these figures is that all these different types of service that can be provided as part of different repair services are implemented using the same modules, executed in a sequence, which is adapted to the type of service that is provided, for example dependent on contract information about the type of service that has been agreed with the customer. The system reads this contract information on receiving a customer identifier and selects the order of execution of the modules on the basis of this information.

The system supports an organization with a separate service transfer point and (possibly independent) repair shops. The system contains a module to select parts to form a batch of parts for joint shipment to the repair shops and to generate documentation to manage these batches. Similarly, a module may be provided to select parts to form a batch of parts (spares from stock and/or repaired parts) for joint shipment to the customer. Such batches are not restricted to parts received jointly from customers, nor do jointly received parts have to be shipped in the same batch. Thus, parts that can repaired faster can be send back faster than parts that take more time to repair, or spares can be sent back immediately for selected parts. Alternatively, the service transfer point may be part of a repair shop.

The system may also contain a module for determining whether and when an invoice should be sent to the customer, dependent on the service contract and on information about the guarantee period of the part and on when the part or a spare part has been returned. Similarly, the system may have a module for determining when an invoice from repair shop should be paid.

In addition the system may be arranged to gather various kinds of information for statistical purposes, for example about the number of parts numbers of part with a certain type number that have been offered for repair, or the speed with which parts of a certain type are repaired.

The system may have different language modules, for generating documents about a repair process of a part in a language selected dependent a preferred language for the identified customer.

## Claims

1. A computer system for management of a repair service process, the system comprising
- software modules, including modules for management of receiving a part to be repaired, sending a spare part, sending a repaired part, closing a repair transaction and receiving back a spare part
- an interface for receiving information that identifies the part to be repaired and a customer for whom the part is to be repaired.
- a storage device for storing contract information about the customer, the system being arranged to determine whether the modules are executed and a sequence in which the modules are executed dependent on the information.

2. A method of managing a repair service, the method comprising
- executing software modules in a sequence determined from a service contract, the modules including modules for management of receiving a part to be repaired, sending a spare part, sending a repaired part, closing a repair transaction and receiving back a spare part.
